**Europäisches Patentamt**

**European Patent Office**

**Office européen des brevets**

(19)

(11) Veröffentlichungsnummer: **0 142 123**
**B1**

(12) # EUROPÄISCHE PATENTSCHRIFT

(45) Veröffentlichungstag der Patentschrift:
09.03.88

(51) Int. Cl.⁴: **C 02 F 3/30, C 02 F 3/10**

(21) Anmeldenummer: 84113385.3

(22) Anmeldetag: 06.11.84

(54) Verfahren und Vorrichtung zur biologischen Denitrifikation von Wasser.

(30) Priorität: 09.11.83 DE 3340549

(43) Veröffentlichungstag der Anmeldung:
22.05.85 Patentblatt 85/21

(45) Bekanntmachung des Hinweises auf die Patenterteilung:
09.03.88 Patentblatt 88/10

(84) Benannte Vertragsstaaten:
AT BE CH DE FR GB IT LI NL

(56) Entgegenhaltungen:
EP - A - 0 065 035
EP - A - 0 075 297
EP - A - 0 077 654
EP - A - 0 091 121
EP - A - 0 100 007
EP - A - 0 102 584

(73) Patentinhaber: **Linde Aktiengesellschaft,**
**Abraham-Lincoln-Strasse 21, D-6200 Wiesbaden (DE)**

(72) Erfinder: **Fuchs, Uwe, Ing. grad., Heiterwanger**
**Strasse 46, D-8000 München 70 (DE)**

(74) Vertreter: **Schaefer, Gerhard, Dr., Linde**
**Aktiengesellschaft Zentrale Patentabteilung,**
**D-8023 Höllriegelskreuth (DE)**

# Beschreibung

Die Erfindung betrifft ein Verfahren zur biologischen Denitrifikation von Wasser, bei dem das zu denitrifizierende Wasser unter Einsatz eines gasförmigen Reduktionsmittels in einem unter anoxischen Bedingungen betriebenen, ein Trägermaterial für die Denitrifikanten enthaltenden Reaktor behandelt wird, sowie eine Vorrichtung zur Durchführung des Verfahrens.

Im Abwasser enthaltener Stickstoff wird in biologischen Kläranlagen bekanntlich durch Nitrifikation und Denitrifikation eliminiert. Bei der Nitrifikation, die hauptsächlich erst nach weitgehender Oxidation der Kohlenstoffverbindungen erfolgt und niedrige Schlammbelastungen, ausreichende Sauerstoffzufuhr und hohes Schlammalter voraussetzt, wird Ammoniumstickstoff durch autotrophe Bakterien zu Nitrat und Nitrit umgewandelt. Bei der Denitrifikation wird unter anoxischen Bedingungen Nitrat und Nitrit zu elementarem Stickstoff reduziert. Die Reduktion erfolgt dabei über fakultativ anaerobe Bakterien, die den bei der Reduktion von Nitrat und Nitrit freiwerdenden Sauerstoff als Wasserstoffakzeptor und für den Abbau organischer Nährstoffe benutzen. Formal wird dabei organisches Substrat durch Nitrit und Nitrat zu Kohlendioxid und Wasser oxidiert. Damit gilt, dass für eine weitgehende Nitratreduktion zu molekularem Stickstoff ausreichend organisches Substrat als C- und H-Donator zugegen sein muss. Als organische Stoffe werden bisher das der Kläranlage zugeführte Rohabwasser oder ein gesondert zugeführtes Substrat, wie z.B. Methanol, verwendet.

Die Durchführung der Denitrifikation erfolgt dabei entweder in einer den Belebungs- und Nitrifikationszonen vorgeschalteten anoxischen Zone, die gegebenenfalls ein Trägermaterial für die Denitrifikanten enthalten kann, unter Aufrechterhaltung eines ausreichenden Angebots an organischen Kohlenstoffverbindungen, wobei der nitrat- und nitrithaltige, kohlenstofffreie Abwasserstrom aus der Nitrifikationszone in die anoxische Zone rezirkuliert wird, oder in einer der Nitrifikationszone nachgeschalteten anoxischen Zone, die gegebenenfalls ebenso ein Trägermaterial für die Denitrifikanten enthalten kann, mit Dosierung von BSB-haltigem Rohabwasser als Kohlenstoffquelle. Die Rezirkulierungsverfahren erfordern jedoch grosse, energieaufwendige Rücklaufverhältnisse und führen durch die Vorschaltung der anoxischen Zone zu einer Verschlechterung des Stickstoffeliminationsgrades der gesamten Abwasserreinigungsanlage. Bei der Nachschaltung der anoxischen Zone verschlechtert die Zugabe eines Teils des Rohabwassers oder eines anderen Substrats den BSB-Wert des Ablaufs.

Abgesehen davon, dass somit diese Verfahren für die Abwasserreinigung keine optimalen Ergebnisse hinsichtlich der Ablaufqualität des behandelten Abwassers liefern, sind diese Verfahren darüber hinaus für eine Trinkwasseraufbereitung völlig ungeeignet, da die für Trinkwasser erforderlichen Grenzwerte, die in der Regel eines BSB$_5$-Gehalt unter 1 mg/l, eien Nitratgehalt unter 30 mg/l und einen Ammoniumstickstoffgehalt unter 2 mg/l vorsehen, auf diese Weise nicht eingehalten werden können.

Für die biologische Denitrifikation von Trinkwasser ist deshalb mit der autotrophen Denitrifikation unter Verwendung von Wasserstoff als Reduktionsmittel ein anderer Weg beschritten worden. Dabei wird im Grundwasser gelöstes Nitrat und Nitrit durch Oxidation von Wasserstoff reduziert und die bei der Reduktion freiwerdende Energie wird von den autotrophen Denitrifikanten für die Reduktion von anorganischem Kohlenstoff genutzt. Der Eintrag des gasförmigen Wasserstoffs erfolgt entweder mit Hilfe eines am Boden eines von oben nach unten mit Wasser durchströmten Denitrifikationsreaktors angebrachten Verteilers oder unter Einsatz eines ausserhalb des Denitrifikationsreaktors angeordneten, mit diesem über einen Wasserkreislauf in Verbindung stehenden Begasungsgefässes. Der Denitrifikationsreaktor enthält dabei in der Regel ein körniges Material aus Kohle oder Kalziumkarbonat, das den Denitrifikanten als Ansiedlungsfläche dient. Das Problem bei einer solchen Denitrifikation liegt jedoch darin, dass die Gasausnutzung und Reaktionsgeschwindigkeit aufgrund der relativ geringen Löslichkeit von Wasserstoff im Wasser und der relativ kleinen Kontaktflächen sehr gering ist.

Der Erfindung liegt die Aufgabe zugrunde, ein Verfahren der eingangs genannten Art sowie eine Vorrichtung zur Durchführung des Verfahrens so auszugestalten, dass auf einfache und wirtschaftliche Weise eine möglichst weitgehende Stickstoffentfernung ohne Beeinträchtigung der Ablaufqualität des behandelten Wassers erreicht werden kann.

Diese Aufgabe wird erfindungsgemäss dadurch gelöst, dass das Trägermaterial mit Reduktionsgas und gegebenenfalls mit Denitrifikanten beladen und in Kontakt zu dem zu denitrifizierenden Wasser gebracht wird.

Durch das Beladen des Trägermaterials mit Reduktionsgas wird erreicht, dass Reduktionsgasbläschen auf und vor allem auch im Trägermaterial angelagert sind, wodurch beim Einbringen des Trägermaterials in das zu behandelnde Wasser grosse Kontaktflächen und lange Kontaktzeiten zwischen Reduktionsgas, Denitrifikanten und Wasser gegeben sind. Da somit die im Trägermaterial gespeicherten Reduktionsgasbläschen erst allmählich an das Wasser abgegeben werden, geht beim Durchströmen des Trägermaterials mit Wasser eine wesentlich grössere Gasmenge als bei einem direkten Gaseintrag in das im Reaktor vorhandene Wasser in Lösung und es ist sichergestellt, dass die Bakterien jederzeit in ausreichender Weise mit dem notwendigen H-Donator versorgt werden.

Da auf diese Weise die Ablaufqualität des behandelten Wassers nicht durch gelöste, unverbrauchte organische Substrate oder Nitratgehalte beeinträchtigt ist, kann das erfindungsgemässe Verfahren ausser bei der Denitrifikation von Abwasser besonders gut auch bei der Trink- und Brauchwassergewinnung eingesetzt werden.

Insbesondere für die Neubeschickung eines Denitrifikationsreaktors mit Trägermaterial, beispielsweise nach einer Betriebspause, ist es sinnvoll, das Trägermaterial nicht nur mit Reduktionsgas, sondern auch mit Denitrifikanten zu beladen, um ein Ingangkommen des Denitrifikationsprozesses zu beschleunigen. Dies kann beispielsweise dadurch erfolgen, dass auf das Trägermaterial nach dem Beladen mit Reduktionsgas Staubteilchen aus getrockneten Denitrifikantenkulturen aufgeblasen werden.

Von Vorteil ist es dabei, wenn als Trägermaterial offenporige flexible Kunststoffteilchen verwendet werden und das Beladen der Kunststoffteilchen im wesentlichen in einer das Reduktionsgas enthaltenden Gasatmosphäre durch Zusammenpressen und Entspannen der Kunststoffteilchen durchgeführt wird. Beim Entspannen wird dann das Reduktionsgas aufgrund der Offenporigkeit der Kunststoffteilchen in diese eingesaugt und in den Poren und an der Oberfläche angelagert.

Zur Erzielung einer wirtschaftlichen Arbeitsweise ist es zweckmässig, das Beladen des Trägermaterials im oberen Bereich des Reaktors durchzuführen und das bei der Denitrifikation entstehende Abgas unterhalb der das Reduktionsgas enthaltenden Gasatmosphäre aufzufangen und abzuleiten. Damit kann zum einen die Anordnung einer gesonderten Beladungseinrichtung ausserhalb des Reaktors, die grundsätzlich aber auch möglich ist, umgangen werden. Zum anderen wird durch das Auffangen und Ableiten des stickstoffhaltigen Abgases unterhalb der das Reduktionsgas enthaltenden Gasatmosphäre vermieden, dass das für die Beladung vorgesehene Reduktionsgas mit Stickstoffgas vermischt wird, das ja gerade aus dem Wasser entfernt werden soll. Da das Abgas neben Stickstoff sicherlich auch einen Anteil nicht in Lösung gegangenen Reduktionsgases enthält, kann es unter Umständen sinnvoll sein, das Abgas in einer Reinigungseinrichtung im wesentlichen in Reduktionsgas und Stickstoffgas zu trennen und den Reduktionsgasanteil der entsprechenden Gasatmosphäre des Reaktors zuzuleiten.

Um stets kontinuierliche Denitrifikationsvorgänge aufrechterhalten zu können, ist es ausserdem vorteilhaft, das Zusammenpressen mit einer solchen Intensität durchzuführen, dass nur überschüssiges bakterielles Wachstum entfernt wird und eine dünne Schicht aus Denitrifikanten auf dem Trägermaterial verbleibt. Diese dünne Schicht aus Denitrifikanten ermöglicht nach dem Eintauchen des Trägermaterials in das zu behandelnde Wasser oder nach dem Besprühen des Trägermaterials mit dem zu behandelndem Wasser sofort das Ingangkommen weiterer Denitrifikationsvorgänge. Ausserdem ist aufgrund dieser dünnen Schicht ein besseres Zurückhalten von Reduktionsgasbläschen im Trägermaterial gegeben. Beim Zusammenpressen des Trägermaterials anfallendes Wasser wird der Einfachheit halber in den unteren Teil des Reaktors abtropfen gelassen, während anfallendes überschüssiges bakterielles Wachstum aufgefangen und gegebenenfalls einer Schlammbehandlung zugeführt wird.

Zweckmässig ist es auch, das Reduktionsgas teilweise direkt in das zu denitrifizierende Wasser einzuleiten. Dadurch wird nicht nur ein zusätzlicher, wenn auch verhältnismässig geringer Anteil des Reduktionsgases im Wasser gelöst, sondern es wird auch die Möglichkeit eröffnet, beim Einsatz von Submersreaktoren mit Hilfe des eingetragenen Gases eine Zirkulationsbewegung im Wasser zu unterstützen, mit der das mit Reduktionsgas beladene Trägermaterial von der Wasseroberfläche in tiefere Wasserschichten geführt werden kann. Eine solche Zirkulationsbewegung wird dabei im wesentlichen durch entsprechende Umwälz- oder Rühraggregate erzeugt.

Als Trägermaterial werden mit Vorteil Kunststoffteilchen aus Polyurethan, Harnstoff-Formaldehydharzen, Polyäthylen, Polypropylen, Silikonpolymeren oder Mischungen einer oder mehrerer der vorgenannten Materialien verwendet, wobei eine offenporige Struktur die Ansiedlung von Denitrifikanten, das Entweichen des entstehenden Stickstoffffs und das Durchströmen des Trägermaterials mit dem zu behandelnden Wasser begünstigt. Diese Materialien sind bis auf Polyurethan insbesondere für die Trinkwasseraufbereitung interessant, da sie physiologisch unbedenklich sind.

In gleicher Weise können Naturschwämme und/oder Kautschukgummischwämme besonders für die Trinkwasseraufbereitung verwendet werden.

Als Reduktionsgas wird zweckmässigerweise kohlenwasserstoffhaltiges Gas und/oder Wasserstoff verwendet. Als kohlenwasserstoffhaltiges Gas ist aus wirtschaftlichen Gründen besonders methanhaltiges Faulgas geeignet, das bei einer anaeroben Schlammfaulung auf einer Abwasserkläranlage sowieso anfällt. Das dem Denitrifikationsreaktor entweichende, noch methanhaltige Abgas kann zum Faulbehälter der Schlammfaulung zurückgeführt oder zu Heizzwecken herangezogen werden. Methanhaltiges Faulgas als Reduktionsgas sollte jedoch weitgehend nur für die Denitrifikation von Abwasser eingesetzt werden, da es eine Reihe von Verunreinigungen enthält. Für die Denitrifikation von Trinkwasser eignet sich somit besonders der Einsatz von Wasserstoffgas.

Ist bei der Aufbereitung von Grundwasser zu Trinkwasser das zur Verfügung stehende Grundwasser arm an Karbonaten, empfiehlt es sich, dem Grundwasser während oder vor einer der Denitrifikation vorausgehenden Nitrifikation anorganischen Kohlenstoff in Form von gasförmigem Kohlendioxid oder von Sodalösung zuzusetzen.

Nach erfolgter Denitrifikation des Wassers ist es insbesondere bei Verwendung von methanhaltigem Faulgas als Reduktionsmittel vorteilhaft, das Wasser durch ein stark durchmischtes und gegebenenfalls belüftetes Becken zum Entfernen von gelöstem Reduktionsgas zu leiten. Dabei wird gelöstes Methan zusammen mit den gebildeten Stickstoff- und Kohlendioxidgasen ausgetrieben.

Neben der bereits erwähnten Anwendung des erfindungsgemässen Verfahrens in der Abwasserreinigung und Trinkwasseraufbereitung ist das erfindungsgemässe Verfahren darüber hinaus auch besonders gut geeignet für die Denitrifikation von Wasser, das bei der Aufzucht von Wassertieren verwendet wird, und für die Denitrifikation stark ammoniakhaltiger Abwässer mit geringer organischer Verschmutzung, wie z.B. Kokereiabwasser, wobei der Ammoniakstickstoff in bekannter Weise in einer vorausgehenden Nitrifikation zu Nitratstickstoff aufoxidiert werden muss.

Zur Entfernung chlorierter Kohlenwasserstoffe und anderer schwer abbaubarer Wasserinhaltsstoffen besteht zusätzlich die Möglichkeit, das Trägermaterial mit Aktivkohle zu dotieren.

Eine Vorrichtung zur Durchführung des Verfahrens umfasst einen unter anoxischen Bedingungen betriebenen, ein Trägermaterial für die Denitrifikanten enthaltenden Reaktor mit einem Zulauf für zu denitrifizierendes Wasser und einem Ablauf für denitrifiziertes Wasser und mit einer Ableitung für Stickstoffgas. Erfindungsgemäss ist eine solche Vorrichtung dadurch gekennzeichnet, dass dem Reaktor eine Einrichtung zum Beladen des Trägermaterials mit Reduktionsgas und gegebenenfalls mit Denitrifikanten zugeordnet ist.

Eine vorteilhafte Ausgestaltung der Vorrichtung zeichnet sich dadurch aus, dass der Reaktor geschlossen ausgebildet ist, der Reaktor eine Zuleitung für Reduktionsgas aufweist, die Einrichtung zum Beladen des Trägermaterials im oberen Bereich des Reaktors angeordnet und als Presseinrichtung ausgebildet ist und der Presseinrichtung eine Fördereinrichtung zum Transport des Trägermaterials vom unteren Bereich des Reaktors zur Presseinrichtung zugeordnet ist.

Zweckmässigerweise ist dabei der obere, die Einrichtung zum Beladen des Trägermaterials enthaltende Bereich des Reaktors durch ein Trennelement vom übrigen Gasraum des Reaktors abgetrennt und das Trennelement mit einer Durchtrittsöffnung für beladenes Trägermaterial versehen. Der Durchtrittsöffnung sollte ein in das Wasser eintauchendes Rohr zugeordnet sein, damit das sich unter dem Trennelement sammelnde, aus dem Wasser aufsteigende stickstoffhaltige Abgas nicht in den oberen, das Reduktionsgas enthaltenden Bereich des Reaktors aufsteigen kann. Dadurch kann eine Verdünnung des Reduktionsgases mit Abgas vermieden werden.

Um im Reaktor eine beispielsweise über entsprechende Rühraggregate erzeugte walzenförmige Strömung, die für einen Eintrag des Trägermaterials in das Wasser notwendig ist, durch einen Gaseintrag unterstützen zu können, ist es vorteilhaft, wenn die Zuleitung für Reduktionsgas je eine Zweigleitung zu dem die Einrichtung zum Beladen des Trägermaterials enthaltenden Bereich des Reaktors und zu einer im unteren Bereich des Reaktors angeordneten Gaseintragseinrichtung aufweist. Aufgrund der relativ geringen Löslichkeit des Reduktionsgases sollte dabei allerdings der Gaseintragseinrichtung nur ein geringer Anteil des Reduktionsgases zugeführt werden.

Für die einfachste Ausführung ist es von Vorteil, den Reaktor als Rieselbettreaktor und/oder als Tropfkörper auszubilden. Da in beiden Fällen das zu behandelnde Wasser in eine Vielzahl von Teilströme aufgeteilt über das im Reaktor angeordnete Trägermaterial verrieselt wird, wird auf einfache Weise erreicht, dass das beladene Trägermaterial mit dem zu behandelnden Wasser durchströmt wird. Dabei besteht sogar die Möglichkeit, einen entsprechenden Reaktor durch eine höhenverstellbare Anordnung des Ablaufs in einer teilüberstauten Fahrweise zu betreiben, ohne dass Trägermaterial zur Wasseroberfläche aufschwimmt.

Für einen intensiven Kontakt zwischen Denitrifikanten und zu behandelndem Wasser ist es jedoch zweckmässiger, den Reaktor als Submersreaktor mit einer von oben nach unten gerichteten, gegebenenfalls in eine Vielzahl von Teilströmen aufgeteilten Wasserströmung auszubilden. Als Submersreaktor kann beispielsweise ein Säulenreaktor mit einer Fülldichte an Trägermaterial von 10 bis 70 Vol-% oder ein Horizontalreaktor, der im unteren Bereich ein Krählwerk zur besseren Durchmischung und für den Transport des Trägermaterials zu der mit der Einrichtung zum Beladen der Trägerteilchen in Verbindung stehenden Fördereinrichtung aufweist, verwendet werden.

Der Ablauf des Reaktors ist zweckmässigerweise an ein Becken mit Rühreinrichtung und gegebenenfalls mit Belüftungseinrichtung angeschlossen. In diesem Becken kann dann bei Verwendung von methanhaltigem Faulgas als Reduktionsgas das gelöste Methan ausgetrieben werden.

Hinsichtlich der Ansiedlung von Denitrifikanten im Trägermaterial und auch hinsichtlich der Anlagerung von Reduktionsgas im Trägermaterial ist es zweckmässig, wenn das Trägermaterial aus Teilchen mit einem Volumen von 0,1 bis 75 cm³, mit Poren von 0,1 bis 5 mm sowie mit einem spezifischen Gewicht von 10 bis 200 kg/m³ gebildet ist. Bei dieser Ausbildung der Trägerteilchen wird dann sowohl den Denitrifikanten als auch dem Reduktionsgas eine grosse Oberfläche zum Festsetzen zur Verfügung gestellt, die aufgrund ihrer Struktur stabile Ansammlungen gewährleistet.

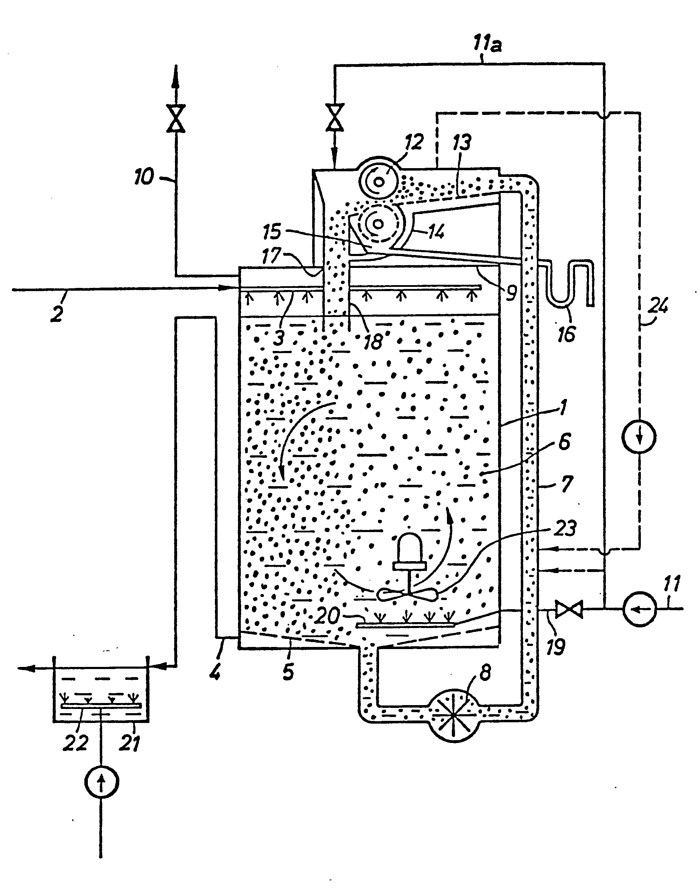

Ein Ausführungsbeispiel einer Vorrichtung zur Durchführung des Verfahrens ist in der Zeichnung schematisch dargestellt.

Mit 1 ist ein unter anoxischen Bedingungen betriebener Denitrifikationsreaktor bezeichnet, der im gezeichneten Fall als Submersreaktor ausgebildet ist und im oberen Bereich einen Zulauf 2 für zu denitrifizierendes Wasser und im unteren Bereich einen Ablauf 4 für denitrifiziertes Wasser aufweist und in dessen Reaktionsraum ein Trägermaterial 6 aus flexiblen, offenporigen Kunststoffteilchen als Ansiedlungsfläche für die Denitrifikanten vorhanden ist. Dem Zulauf 2 ist im oberen Bereich des Reaktionsraums eine Verteileinrichtung 3, die beispielsweise eine offene Rinne mit perforiertem Boden sein kann, zur Aufteilung des ankommenden Wassers in eine Vielzahl von Teilströmen zugeordnet. Der Ablauf 4 für denitrifiziertes Wasser ist ausserhalb des Reaktors 1 nach oben gezogen, so dass dessen vertikale nach oben gerichtete Länge die Höhe des zu behandelnden Wassers im Reaktor 1 bestimmt. Ist der Ablauf 4 höhenverstellbar, d.h., ist die vertikal nach oben gerichtete Länge des Ablaufs 4 variabel, ist eine teilüberstaute Fahrweise des Reaktors 1 oder sogar die Ausbildung des Reaktors 1 als Rieselbettreaktor möglich.

Dem Anschluss des Ablaufs 4 ist eine Rückhalteeinrichtung 5 zugeordnet, die ein Abtreiben des Trägermaterials 6 mit dem denitrifizierten Wasser in den Ablauf 4 verhindert. Diese kann als ein trichterartig zur Mitte des Reaktorbodens verlaufendes Sieb oder Gitternetz mit entsprechender Loch- bzw. Maschenweite ausgebildet sein. In der Mitte des Reaktorbodens ist eine Rückleitung 7 mit Fördereinrichtung 8, die eine Förderschnecke, ein Becherwerk oder auch eine Mammutpumpe sein kann, angeschlossen, über die das Trägermaterial zum oberen Bereich des Reaktors 1 zurücktransportiert werden kann.

Der obere Bereich des Reaktors 1 ist durch ein Trennelement 9 in zwei Gasräume aufgeteilt. Unterhalb des Trennelements 9 bildet sich im Reaktionsraum über der Wasseroberfläche ein Abgasraum, in dem sich das aus dem Wasser aufsteigende Gas, das reich an Stickstoffgas ist, sammelt. Diesem Abgasraum ist eine Ableitung 10 für Abgas zugeordnet. Oberhalb des Trennelements 9 ist ein eine Reduktionsgasatmosphäre aufweisender Gasraum vorhanden, dem über eine Zuleitung 11a Reduktionsgas, wie Wasserstoff oder methanhaltiges Faulgas, zugeführt wird.

In diesem das Reduktionsgas enthaltenden Gasraum ist als eine Einrichtung zum Beladen der Kunststoffteilchen mit Reduktionsgas eine Presseinrichtung 12 angeordnet, die beispielsweise zwei gegenläufig rotierende Presswalzen, von denen die untere perforiert ausgebildet ist, aufweisen kann. Vor der Presseinrichtung 12 wird das über die Rückleitung 7 und die Fördereinrichtung 8 ankommende Trägermaterial 6 über eine perforierte Rutsche 13 geleitet, die zur Vorentwässerung dient. Unterhalb der perforierten Rutsche wird das ablaufende Wasser aufgefangen und über eine Leitung 14 dem im unteren Bereich des Reaktors 1 vorhandenen Reaktionsraum zugeleitet.

In der Presseinrichtung 12 werden die Kunststoffteilchen des Trägermaterials komprimiert und ein Teil der anhaftenden Bakterien und der enthaltenen Flüssigkeit ausgepresst. Das beim Auspressen entfernte Schlamm-Flüssigkeitsgemisch gelangt aufgrund der perforierten Ausbildung der unteren Presswalze in einen unterhalb der Presswalzen angeordneten Auffangbehälter 15, an den eine Schlammableitung 16 angeschlossen ist, die zur weiteren Behandlung des anfallenden Schlamms beispielsweise mit einem Eindicker in Verbindung steht. Der Lochdurchmesser der unteren Presswalze und auch der Lochdurchmesser der Rutsche 13 ist dabei so gewählt, dass nur das Schlamm-Wasser-Gemisch abläuft, nicht jedoch die Kunststoffteilchen hindurchfallen können. Dies wird mit einem Lochdurchmesser von 2 bis 10 mm erreicht. Die Anzahl der Löcher sollte vorteilhafterweise 1 bis 5 pro 10 cm² betragen.

Der Walzendruck, der gegebenenfalls mit Hilfe von Federn erzeugt wird, ist dabei so einzustellen, dass auf den Kunststoffteilchen auch nach dem Pressvorgang eine dünne Schicht aus Denitrifikanten verbleibt, damit nach dem Rückleiten der Kunststoffteilchen in den Reaktionsraum des Reaktors diese nicht erst wieder neu mit Denitrifikanten besiedelt werden müssen, was den Ablauf des Denitrifikationsprozesses beeinträchtigen würde. Ein Pressdruck, bei dem die Kunststoffteilchen auf 5 bis 30% ihres ursprünglichen Volumens komprimiert werden, ist ausreichend.

Da die Presswalzen der Presseinrichtung 12 in dem Gasraum des Reaktors 1 angeordnet sind, in dem die Reduktionsgasatmosphäre aufrechterhalten wird, saugen die Kunststoffteilchen beim Entspannen nach den Presswalzen Reduktionsgas in sich auf. Eine für das Ansaugen von Reduktionsgas, das Entweichenlassen von entstehendem Stickstoffgas und das Durchströmen mit Wasser geeignete Porengrösse des Trägermaterials liegt im Bereich von 0,1 bis 5 mm bei einem Volumen der Teilchen von 0,1 bis 75 cm³ und einem spezifischen Gewicht von 10 bis 200 kg/m³.

Die mit Reduktionsgas beladenen und eine dünne Schicht aus Denitrifikanten aufweisenden Kunststoffteilchen gelangen dann aufgrund der Schwerkraft durch eine Durchtrittsöffnung 17 im Trennelement 9 und durch einen der Durchtrittsöffnung 17 zugeordneten Schacht 18 in den unterhalb des Abgasraums vorhandenen Reaktionsraum des Reaktors 1. Um zu erreichen, dass sich die beladenen Kunststoffteilchen auch in dem zu denitrifizierenden Wasser verteilen, ist es zweckmässig, in dem Reaktionsraum des Reaktors 1 eine walzenförmige Strömung aufrechtzuerhalten. Zur Erzeugung dieser Walzenströmung ist ein Umwälzaggregat 23 vorhanden. Ausserdem kann die Zuleitung 11 für Reduktionsgas eine Zweigleitung 19 aufweisen, die an eine im unteren Bereich des Reaktionsraumes angeordnete Gaseintragseinrichtung 20 angeschlossen ist, wodurch die Aufrechterhaltung der walzenförmigen Strömung durch aus der Gaseintragseinrichtung 20 aufsteigende Reduktionsgasblasen unterstützt werden kann. Allerdings sollte die über die Gaseintragseinrichtung 20 zugeführte Gasmenge nur gering sein, da die vorgesehenen Reduktionsgase relativ gering wasserlöslich sind.

Um in der Rückleitung 7 zur Förderung des Trägermaterials einen Mammutpumpeneffekt zu erzeugen, ist es unter Umständen zweckmässig, die Zuleitung 11 für Reduktionsgas nicht dem die Reduktionsgasatmosphäre enthaltenden Gasraum zuzuordnen, sondern wie in der Zeichnung über eine gestrichelte Leitung angedeutet ist, direkt an die Rückleitung 7 so anzuschliessen, dass mit dem eingetragenen Reduktionsgas die Kunststoffteilchen mitgerissen werden. Das aufsteigende Gas sammelt sich dann nach Austritt aus der Rückleitung 7 in dem oberen Gasraum und wird beim Entspannen der Kunststoffteilchen nach der Presseinrichtung 12 in die Kunststoffteilchen eingesaugt. Mechanische Fördereinrichtungen können dann entfallen. Zusätzlich sollte jedoch über eine ebenso gestrichelt dargestellte Leitung 24 Reduktionsgas aus dem oberen Gasraum unten in die Rückleitung 7 eingetragen werden.

Wird ein solcher Reaktor für die Denitrifikation von Trinkwasser eingesetzt, empfiehlt es sich, als Trägermaterial Kunststoffteilchen aus Harnstoff-Formaldehydharzen, Polyäthylen, Polypropylen, Silikonpolymer oder Mischungen dieser Materialien zu verwenden, da solche Materialien physiologisch unbedenklich sind. Ausserdem sollte dann Wasserstoff als Reduktionsgas eingesetzt werden, da methanhaltiges Faulgas Verunreinigungen, wie Schwefelwasserstoff, enthält. Zweckmässig ist es auch, den Ablauf 4 für denitrifiziertes Wasser an ein Becken 21 anzuschliessen, in dem eine Belüftungseinrichtung 22 oder zumindest eine Rühreinrichtung angeordnet ist, um im behandelten Wasser noch enthaltene Restgase austragen zu können. Falls das für die Trinkwasseraufbereitung verwendete Grundwasser karbonatarm ist, kann an die Zuleitung 2 für zu denitrifizierendes Wasser ein Zulauf für anorganischen Kohlenstoff, entweder in Form von $CO_2$ oder Sodalösung, angeschlossen sein. Der anorganische Kohlenstoff kann aber auch bereits bei einer der Denitrifikation vorausgehenden Nitrifikation zugegeben werden.

Statt wie dargestellt den Reaktor als vertikal stehenden Reaktor auszubilden, besteht auch die Möglichkeit, einen Horizontalreaktor zu verwenden. Dieser sollte im Reaktionsraum ein langsam drehendes Krählwerk aufweisen, mit dem das Trägermaterial umgewälzt und zu der der Presseinrichtung zugeordneten Fördereinrichtung transportiert wird. Der an einem Ende des Reaktors angeordneten Presseinrichtung ist zweckmässigerweise ein Transportband nachzuschalten, das das beladene Trägermaterial im Gasraum zum anderen Ende des Reaktors transportiert und dort über dem Anfang des Krählwerkes in das zu behandelnde Wasser fallen lässt.

Wird methanhaltiges Faulgas als Reduktionsgas verwendet, ist es unter Umständen auch möglich, das Trennelement 9, das den oberen Bereich des Reaktors in einen Abgasraum und einen die Reduktionsgasatmosphäre enthaltenden Gasraum aufteilt, entfallen zu lassen, da methanhaltiges Faulgas in der Regel kostengünstig zur Verfügung steht und ein Ablassen eines Teils des methanhaltigen Faulgases mit dem Abgas kaum eine Rolle spielt.

Als weitere Alternative kann für das Ingangsetzen des Denitrifikationsprozesses, beispielsweise nach einer Betriebspause des Reaktors, in dem die Reaktionsgasatmosphäre enthaltenden Gasraum zusätzlich zu der Einrichtung 12 zum Beladen des Trägermaterials mit Reduktionsgas eine Einrichtung zum Aufblasen von getrockneten Denitrifikantenkulturen auf das Trägermaterial vorhanden sein. Damit kann dann auch das Trägermaterial schon für den ersten Arbeitsgang mit einer dünnen Schicht aus Denitrifikanten versehen werden.

## Patentansprüche

1. Verfahren zur biologischen Denitrifikation von Wasser, bei dem das zu denitrifizierende Wasser unter Einsatz eines gasförmigen Reduktionsmittels in einem unter anoxischen Bedingungen betriebenen, ein Trägermaterial für die Denitrifikanten enthaltenden Reaktor behandelt wird, dadurch gekennzeichnet, dass das Trägermaterial mit Reduktionsgas und gegebenenfalls mit Denitrifikanten beladen und in Kontakt zu dem zu denitrifizierenden Wasser gebracht wird.

2. Verfahren nach Anspruch 1, dadurch gekennzeichnet, dass als Trägermaterial offenporige, flexible Kunststoffteilchen verwendet werden und das Beladen der Kunststoffteilchen im wesentlichen in einer das Reduktionsgas enthaltenden Gasatmosphäre durch Zusammenpressen und Entspannen der Kunststoffteilchen durchgeführt wird.

3. Verfahren nach Anspruch 1 oder 2, dadurch gekennzeichnet, dass das Beladen des Trägermaterials im oberen Bereich des Reaktors durchgeführt und das bei der Denitrifikation entstehende Abgas unterhalb der das Reduktionsgas enthaltenden Gasatmosphäre aufgefangen und abgeleitet wird.

4. Verfahren nach Anspruch 2 oder 3, dadurch gekennzeichnet, dass das Zusammenpressen mit einer solchen Intensität durchgeführt wird, dass nur überschüssiges bakterielles Wachstum entfernt wird und eine dünne Schicht aus Denitrifikanten auf dem Trägermaterial verbleibt.

5. Verfahren nach einem der Ansprüche 2 bis 4, dadurch gekennzeichnet, dass das Reduktionsgas teilweise direkt in das zu denitrifizierende Wasser eingeleitet wird.

6. Verfahren nach einem der Ansprüche 1 bis 5, dadurch gekennzeichnet, dass als Trägermaterial Kunststoffteilchen aus Polyurethan und/oder Harnstoff-Formaldehydharzen und/oder Polyäthylen und/oder Polypropylen und/oder Silikonpolymer mit offenen Poren verwendet werden.

7. Verfahren nach einem der Ansprüche 1 bis 5, dadurch gekennzeichnet, dass als Trägermaterial Naturschwämme und/oder Kautschukgummischwämme verwendet werden.

8. Verfahren nach einem der Ansprüche 1 bis

7, dadurch gekennzeichnet, dass als Reduktionsgas kohlenwasserstoffhaltiges Gas und/oder Wasserstoff verwendet wird.

9. Verfahren nach einem der Ansprüche 1 bis 8, dadurch gekennzeichnet, dass nach erfolgter Denitrifikation des Wassers dieses durch ein stark durchmischtes und gegebenenfalls belüftetes Becken zum Entfernen von gelöstem Reduktionsgas geleitet wird.

10. Vorrichtung zur Durchführung des Verfahrens nach einem der Ansprüche 1 bis 9 mit einem unter anoxischen Bedingungen betriebenen, ein Trägermaterial für die Denitrifikanten enthaltenden Reaktor mit einem Zulauf für zu denitrifizierendes Wasser und einem Ablauf für denitrifiziertes Wasser und mit einer Ableitung für Abgas, dadurch gekennzeichnet, dass dem Reaktor (1) eine Einrichtung (12) zum Beladen des Trägermaterials mit Reduktionsgas und gegebenenfalls mit Denitrifikanten zugeordnet ist.

11. Vorrichtung nach Anspruch 10, dadurch gekennzeichnet, dass der Reaktor (1) geschlossen ausgebildet ist, der Reaktor (1) eine Zuleitung (11, 11a) für Reduktionsgas aufweist, die Einrichtung (12) zum Beladen des Trägermaterials im oberen Bereich des Reaktors (1) angeordnet und als Presseinrichtung ausgebildet ist und der Presseinrichtung (12) eine Fördereinrichtung (8) zum Transport des Trägermaterials vom unteren Bereich des Reaktors (1) zur Presseinrichtung (12) zugeordnet ist.

12. Vorrichtung nach Anspruch 11, dadurch gekennzeichnet, dass der obere, die Einrichtung zum Beladen (12) des Trägermaterials enthaltende Bereich des Reaktors (1) durch ein Trennelement (9) vom übrigen Gasraum des Reaktors (1) abgetrennt ist und das Trennelement (9) eine Durchtrittsöffnung (17) für beladenes Trägermaterial aufweist.

13. Vorrichtung nach Anspruch 11 oder 12, dadurch gekennzeichnet, dass die Zuleitung (11) für Reduktionsgas je eine Zweigleitung (11a, 19) zu dem die Einrichtung (12) zum Beladen des Trägermaterials enthaltenden Bereich des Reaktors (1) und zu einer im unteren Bereich des Reaktors (1) angeordneten Gaseintragseinrichtung (20) aufweist.

14. Vorrichtung nach einem der Ansprüche 10 bis 13, dadurch gekennzeichnet, dass der Reaktor (1) als Rieselbettreaktor und/oder Tropfkörper ausgebildet ist.

15. Vorrichtung nach einem der Ansprüche 10 bis 13, dadurch gekennzeichnet, dass der Reaktor (1) als Submersreaktor mit einer von oben nach unten gerichteten, gegebenenfalls in eine Vielzahl von Teilströmen aufgeteilte Wasserströmung ausgebildet ist.

16. Vorrichtung nach einem der Ansprüche 10 bis 15, dadurch gekennzeichnet, dass an den Ablauf (4) des Reaktors (1) ein Becken (21) mit Rühreinrichtung und gegebenenfalls mit Belüftungseinrichtungen (22) angeschlossen ist.

17. Vorrichtung nach einem der Ansprüche 10 bis 16, dadurch gekennzeichnet, dass das Trägermaterial (6) aus Teilchen mit einem Volumen von 0,1 bis 75 $cm^3$, Poren von 0,1 bis 5 mm sowie mit einem spezifischen Gewicht von 10 bis 200 $kg/m^3$ gebildet ist.

**Claims**

1. A process for the biological denitrification of water wherein the water to be denitrified is treated using a gaseous reducing agent in a reactor which is operated under anoxic conditions and which contains a carrier material for the denitrificants, characterised in that the carrier material is charged with reducing gas and, if necessary, with denitrificants, and is brought into contact with the water to be denitrified.

2. A process as claimed in Claim 1, characterised in that the carrier material consists of open-pored, flexible synthetic resin particles, and the charging of the synthetic resin particles is essentially carried out in a gas atmosphere containing the reducing gas by compression and expansion of the synthetic resin particles.

3. A process as claimed in Claim 1 or 2, characterised in that charging of the carrier material is carried out in the upper region of the reactor, and the waste gas which is formed during the denitrification is collected and discharged beneath the gas atmosphere containing the reducing gas.

4. A process as claimed in Claim 2 or 3, characterised in that the compression is carried out at an intensity which is such that only excess, bacterial growth is removed, and a thin layer of denitrificants remains on the carrier material.

5. A process as claimed in one of Claims 2 to 4, characterised in that the reducing gas is in part introduced directly into the water to be denitrified.

6. A process as claimed in one of Claims 1 to 5, characterised in that the carrier material consists of synthetic resin particles of polyurethane and/or urea-formaldehyde resins and/or polyethylene and/or polypropylene and/or silicone polymer, with open pores.

7. A process as claimed in one of Claims 1 to 5, characterised in that natural sponges and/or rubber sponges are used as carrier material.

8. A process as claimed in one of Claims 1 to 7, characterised in that hydrocarbon-containing gas and/or hydrogen is used as reducing gas.

9. A process as claimed in one of Claims 1 to 8, characterised in that after the denitrification of the water, it is conducted through a thoroughly mixed and possibly aerated basin in order to remove dissolved reducing gas.

10. Apparatus for carrying out the process claimed in one of Claims 1 to 9, comprising a reactor which is operated under anoxic conditions and which contains a carrier material for the denitrificants, with an inflow for water to be denitrified and an outflow for denitrified water, and a discharge pipe for waste gas, characterised in that the reactor (1) is allotted a device (12) for charging the carrier material with reducing gas and, if necessary, with denitrificants.

11. Apparatus as claimed in Claim 10, charac-

terised in that the reactor (1) is a closed reactor, the reactor (1) is provided with a supply pipe (11, 11a) for reducing gas, the device (12) for charging the carrier material is arranged in the upper region of the reactor (1) and consists of a compression device, and the compression device (12) is allotted a conveyor device (8) which transports the carrier material from the lower region of the reactor (1) to the compression device (12).

12. Apparatus as claimed in Claim 11, characterised in that the upper region of the reactor (1) which contains the device (12) for charging the carrier material, is separated by a separating element (9) from the remaining gas space of the reactor (1), and the separating element (9) contains an opening (17) for the passage of charged carrier material.

13. Apparatus as claimed in Claim 11 or 12, characterised in that the supply pipe (11) for reducing gas is provided with respective branch pipes (11a, 19) to the region of the reactor (1) which contains the device (12) for charging the carrier material and to a gas input device (20) arranged in the lower region of the reactor (1).

14. Apparatus as claimed in one of Claims 10 to 13, characterised in that the reactor (1) is in the form of a trickle bed reactor and/or a trickle filter.

15. Apparatus as claimed in one of Claims 10 to 13, characterised in that the reactor (1) is in the form of a submersion reactor with a downwardly-directed water flow which is possibly divided into a plurality of sub-streams.

16. Apparatus as claimed in one of Claims 10 to 15, characterised in that the outflow (4) of the reactor (1) is connected to a basin (21) containing an agitating device and, if necessary, aerating devices (22).

17. Apparatus as claimed in one of Claims 10 to 16, characterised in that the carrier material (6) is formed from particles with a volume of 0.1 to 75 cm³, pores of 0.1 to 5 mm, and a specific gravity of 10 to 200 kg/m³.

**Revendications**

1. Procédé de dénitrification biologique d'eau dans lequel l'eau à dénitrifier est traitée avec utilisation d'un agent réducteur gazeux dans un réacteur fonctionnant dans des conditions anoxiques et contenant un matériau support d'agents de dénitrification, caractérisé en ce que le matériau porteur est chargé de gaz réducteur et, le cas échéant, d'agents de dénitrification et qu'il est mis au contact de l'eau à dénitrifier.

2. Procédé selon la revendication 1, caractérisé en ce que l'on utilise comme matériau porteur des particules de matière plastique flexible à pores ouverts et en ce que le chargement des particules de matière plastique est effectué essentiellement dans une atmosphère gazeuse contenant le gaz réducteur par compression et détente des particules de matière plastique.

3. Procédé selon la revendication 1 ou 2, caractérisé en ce que le chargement du matériau support est effectué dans la partie supérieure du réacteur et le gaz effluent formé lors de la dénitrification est capté et évacué en-dessous de l'atmosphère gazeuse contenant le gaz réducteur.

4. Procédé selon la revendication 2 ou 3, caractérisé en ce que la compression est effectuée avec une intensité telle que seule la croissance bactérienne en excès soit éliminée et qu'il subsiste une couche mince d'agents de dénitrification sur le matériau porteur.

5. Procédé selon l'une quelconque des revendications 2 à 4, caractérisé en ce que le gaz réducteur est introduit partiellement de façon directe dans l'eau à dénitrifier.

6. Procédé selon l'une quelconque des revendications 1 à 5, caractérisé en ce que l'on utilise comme matériau support des particules de matière plastique en polyuréthane et/ou en résine uréeformaldéhyde et/ou en polyéthylène et/ou en polypropylène et/ou en polymère de silicone présentant des pores ouverts.

7. Procédé selon l'une quelconque des revendications 1 à 5, caractérisé en ce que l'on utilise comme matériau porteur des éponges naturelles ou des éponges en caoutchouc mousse.

8. Procédé selon l'une quelconque des revendications 1 à 7, caractérisé en ce que l'on utilise comme gaz réducteur un gaz contenant des hydrocarbures et/ou de l'hydrogène.

9. Procédé selon l'une quelconque des revendications 1 à 8, caractérisé en ce que, à la suite de la dénitrification de l'eau, on fait passer celle-ci par un bassin soumis à une forte agitation et, le cas échéant, aéré pour l'élimination du gaz réducteur dissous.

10. Dispositif de mise en œuvre du procédé selon l'une quelconque des revendications 1 à 9, comportant un réacteur fonctionnant des conditions anoxiques, contenant un matériau support pour les agents de dénitrification, pourvu d'une arrivée d'eau à dénitrifier et d'une conduite d'évacuation de l'eau dénitrifiée comportant une évacuation du gaz effluent, caractérisé en ce que, au réacteur (1), est associé un dispositif (12) de chargement du matériau support en gaz réducteur et, le cas échéant, en agents de dénitrification.

11. Dispositif selon la revendication 10, caractérisé en ce que le réacteur (1) est fermé, ledit réacteur (1) comporte une conduite d'arrivée (11, 11a) du gaz réducteur, l'installation (12) de chargement du matériau support est disposée à la partie supérieure du réacteur (1) et elle est conçue comme un dispositif de compression et, avec le dispositif de compression (12), coopère un dispositif d'acheminement (8) pour le transport du matériau de la partie inférieure du réacteur (1) vers le dispositif de compression (12).

12. Dispositif selon la revendication 11, caractérisé en ce que la partie supérieure du réacteur (1) contenant le dispositif de chargement (12) du matériau porteur est séparée par une cloison (9) du reste de l'espace récepteur de gaz du réacteur (1) et l'élément de séparation (9) comporte un orifice (17) de traversée du matériau support chargé.

13. Dispositif selon la revendication 11 ou 12, caractérisé en ce que la conduite (11) d'arrivée du gaz réducteur comporte des embranchements (11a, 19) vers la partie du réacteur (1) contenant l'installation (12) de chargement du matériau support et vers un dispositif (20) d'introduction du gaz disposé à la partie inférieure du réacteur (1).

14. Dispositif selon l'une quelconque des revendications 10 à 13, caractérisé en ce que le réacteur (1) est conçu comme un réacteur à lit de ruissellement ou un réacteur à corps d'égouttement.

15. Dispositif selon l'une quelconque des revendications 10 à 13, caractérisé en ce que le réacteur (1) est conçu comme un réacteur submergé comportant un écoulement d'eau dirigé du haut vers le bas, subdivisé le cas échéant en une pluralité de courants partiels.

16. Dispositif selon l'une quelconque des revendications 10 à 15, caractérisé en ce que, à la conduite 4 d'écoulement du réacteur 1, est raccordé un bassin (21) comportant un dispositif d'agitation et, le cas échéant, des dispositifs (22) d'aération.

17. Dispositif selon l'une quelconque des revendications 10 à 16, caractérisé en ce que le matériau porteur (6) est formé de particules d'un volume de 0,1 à 75 cm$^3$, d'un poids spécifique de 10 à 200 kg/m$^3$ et dont les pores ont des dimensions comprises entre 0,1 et 5 mm.